(19) Europäisches Patentamt
European Patent Office
Office européen des brevets

(11) **EP 2 563 076 B1**

(12) **EUROPEAN PATENT SPECIFICATION**

(45) Date of publication and mention
of the grant of the patent:
**19.07.2017 Bulletin 2017/29**

(51) Int Cl.:
***H04W 52/02*** *(2009.01)*   *H04W 68/02* *(2009.01)*
***H04L 1/00*** *(2006.01)*

(21) Application number: **11009442.2**

(22) Date of filing: **29.11.2011**

(54) **Empty page detection technique**

Technik zur Erkennung einer leeren Funkrufnachricht

Technique de détection d'un indicateur d'appel vide

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2011 IN DE23882011**

(43) Date of publication of application:
**27.02.2013 Bulletin 2013/09**

(73) Proprietor: **Telefonaktiebolaget LM Ericsson
(publ)
164 83 Stockholm (SE)**

(72) Inventor: **Jacob, Naveen
Bangalore 560020 (IN)**

(74) Representative: **Ericsson
Patent Development
Torshamnsgatan 21-23
164 80 Stockholm (SE)**

(56) References cited:
**EP-A1- 1 389 883      EP-A1- 1 816 882
EP-A2- 1 489 863      EP-A2- 1 670 274
US-B1- 6 765 893**

**Description**

**Technical Field**

The present disclosure relates to mobile communications and in particular a technique for detecting empty page signals.

**Background**

In a mobile communication system, one or more mobile terminals communicate wirelessly with a mobile communication network. The network transmits all sorts of data, such as traffic data and control data, to the mobile terminals. The mobile terminals receive the data and process it accordingly. When a mobile terminal is actively engaged in user communication, such as a voice call, text messaging, multimedia content uploading/downloading, and so on, the mobile terminal needs to consume power since the user communication involves, among others, the use of the radio receiver of the mobile terminal for receiving/transmitting data to the network, or in some cases, one or more other communication devices.

When a mobile terminal is powered on but not actively engaged in user communication, it typically operates in an idle mode. Other terms of "idle mode" include "idle state", "standby mode", "standby state", and the like. During the idle mode, although the mobile terminal is not actively engaged in any user communication, it still needs to perform certain tasks which enable it to be ready for use. For example, the mobile terminal needs to be prepared for initiating or receiving user communication such as a voice call.

The tasks for the mobile terminal to perform in the idle mode are usually specified in the standard related to the particular mobile communication system. While the particular tasks to be performed in idle mode and the way they are performed may vary from one communication system to another, some tasks are common to many systems. To facilitate understanding, the discussion here below will refer to a widely-used mobile communication system, the standardized Global System for Mobile communication (GSM).

Many tasks for the mobile terminal to perform in idle mode are mandatory, and, naturally, they require power consumption because they involve the use of the radio receiver of the mobile terminal. How often and how intensively the radio receiver is utilized has a large impact on the power consumption of the mobile terminal. This means, among others, if the time and occurrence of radio reception can be reduced, the power consumption of the mobile terminal can be lowered.

As specified in GSM as well as some other communication standards, one of the tasks that a mobile terminal performs in idle mode is to listen to the paging channel (PCH). The paging channel is a downlink channel transmitted over the entire serving area of a base station. The paging channel is used to, among others, notify a mobile terminal served by the base station that is has inbound communication. The transmission of the paging channel is associated with the transmission of physical-layer generated paging indicators, to support, for example, sleep-mode procedures.

In this mode, the mobile terminal is signaled in the paging channel by the base station with page (or paging) signals, or messages, which, among others, inform the mobile terminal whether there is any inbound communication, such as an incoming voice call, an incoming Short Message Service (SMS) message, or the like. Usually, the paging channel is used periodically for such purposes. Consequently, the mobile terminal needs to listen to the paging channel, for example, periodically, so that upon reception of paging information indicating an occurrence of inbound communication, the mobile terminal can activate relevant functions to receive such communication.

Sometimes, the page signal is a so-called "empty page" (or "empty paging", "dummy page", "dummy paging") signal, or message. The term "empty paging" means that the page signal does not include any instruction or information for the mobile terminal to act upon. In many communication systems such as GSM, the messages transmitted on the logical channels, including the PCH, are interleaved, or spread, over several data units on the radio channel. A data unit is a group of data within an entire signal or message. Other terms of data unit may be data block, message segment, signal portion, and so on. In many communication systems such as GSM, a typical term for such data unit is "burst". Usually, at the transmitting side, a GSM logical-channel message is interleaved over four bursts on the radio channel, while at the receiver side, a normal way of receiving such a message is to receive all the bursts and then decode the data contained therein for further processing.

Normally, upon detecting an empty page signal, the mobile terminal will enter a sleep mode instead of spending time in decoding the data contained in the (empty) page signal. In fact, once the mobile terminal has entered the idle mode, the majority of the data in the paging channel corresponds to empty paging, i.e., the empty paging data does not contain any valid information for the mobile terminal to act upon. Therefore, the earlier that empty paging can be detected, the earlier can the mobile terminal receiver be switched off for power saving. Hence, quick, accurate empty paging detection can bring power savings and a higher battery life for the mobile terminal.

Various methods for empty paging detection have been available for a period of time. The performance of these methods is normally in the range of (1-Forward Error Rate (FER) upon decoding using two bursts) to (1-FER upon decoding using three bursts). According to some of these methods, in some circumstances such as if the radio conditions are good, it may not be necessary to receive and decode all the bursts of a PCH message in order to determine empty page, because such message comprises redundant bits. (A GSM PCH message contains 456 coded bits, interleaved over four bursts, but only 184 bits thereof carry the actual information.) Simulations have shown that, under good radio conditions, decoding the data from only two bursts is satisfactory enough to recreate the original message. When the radio conditions are slightly worse than optimum, three bursts can be sufficient for PCH message decoding.

Many of the available methods store the reference pattern for the empty paging data unit as the originally received bursts. In other words, one or more received bursts may be stored as a reference pattern for the empty paging data unit. However, it has been found that such a reference pattern is not an exact replica to compare with. Hence, the available methods lead to inaccurate results, especially when the radio conditions for the mobile terminal are inferior or the mobile terminal experiences fading.

A constant demand from users of mobile terminals is low(er) power consumption. Hence, it is necessary to reduce the power consumption of mobile terminals as much as possible. Since radio receiver activity contributes to a significant part of the power consumption in idle mode of the mobile terminal, it is important to reduce the radio reception time and occurrence in idle mode.

Paging channel detection techniques are known from EP1670274A2, EP1489863A2, EP1816882A1, US6765893B1, and EP1389883A1.

## Summary

Accordingly, it is an object to provide a quick, accurate empty paging detection.

According to a first aspect, a method is provided according to independent method claim 1 appended hereto for determining whether a paging channel signal which comprises one or more data units is an empty page signal. The method comprises the steps of receiving a first data unit of the paging channel signal, obtaining an empty-paging data unit of the paging channel signal as a reference data unit (or a reference pattern), correlating the reference data unit with the first data unit received to obtain a first correlation result, and determining whether the paging channel signal is an empty page signal based on the first correlation result.

The step of obtaining the empty-paging data unit may comprise the steps of decoding a previously-received data unit of the paging channel signal, and, if the decoded data unit comprises empty-paging data, re-encoding the decoded data unit into the reference data unit. The decoding may be performed by PCH decoding. Examples of PCH decoding include partial data decoding, full data decoding, and so on.

The method further comprises a step of controlling the enabling and disabling of at least the correlation step (and, optionally, one or more further steps). For example, a controlling mechanism may be provided to "switch on/off" the correlation (and, optionally, one or more further correlation steps).

The method further comprises the steps of receiving, if an empty page signal is not detected with the first correlation result, a further data unit of the paging channel signal, correlating the reference data unit with this further data unit received to obtain a further correlation result, and determining whether the paging channel signal is an empty page signal based on the further correlation result.

The correlation may be performed according to the below equation:

$$Soft\ Correlation1 = \sum_{k=1}^{N}(\text{softValue}[k] * \text{referencePattern}[k]) \qquad \text{Equation (1)}.$$

SoftValue[k] means the equalized data value (for example, equalization for fading and the like encountered by virtue of the propagation channel) for the original bit information, for example, '1' or '0', for each data bit indexed by 'k'; referencePattern[k] means the reference equalized data value represented as '+1' and '-1' corresponding to bit '0' and '1', respectively; and softCorrelation1 is the total correlation value upon considering the equalized data of the received data unit. The summation index k=1 to N corresponds to the data bit index with the upper index N corresponding to length of 1 received data unit for single data unit correlation and length of 2 received data units for double data unit correlation.

In the above Equation (2), K1 denotes a constant.

The determination of whether the paging channel signal is an empty page signal further comprises comparing the first and/or the further correlation result to at least one threshold value. This threshold value is obtained according to

$$Threshold1 = K1 \sum_{k=1}^{N}(abs(softValue[k]))$$

Equation (2).

The method is designed such that the further correlation result is obtained with a higher K1 value than that of for obtaining the first correlation result.

The method may further comprise a step of determining if soft bits, or soft values, of the received data units are greater than or equal to a predefined value. The predefined value may be set as having a width of two bits.

The method may further comprise a step of stopping the reception of further, or remaining, data units of the paging channel signal. This means that the remaining data units are not received at all, thus saving power.

According to a second aspect, a solution can also be realized by a computer program product which comprises program code portions for performing the steps of any of the methods mentioned herein when the computer program product is run on a computing device. A computer-readable recording medium may further store the computer program product according to the second aspect. According to another aspect of the empty-paging detection technique, an apparatus is provided according to the independent apparatus claim appended hereto for determining whether a paging channel signal which comprises one or more data units is an empty-page signal. The apparatus comprises a receiving component adapted to receive a first data unit of the paging data signal, a coding component adapted to obtain an empty-paging data unit of the paging channel signal as a reference data unit, a correlator adapted to correlate the reference data unit with the first data unit received to obtain a first correlation result, and a determinator adapted to determine, based on the first correlation result, whether the paging channel signal is an empty page signal.

The coding component adapted to obtain the empty-paging data unit may be adapted to decode a previously-received data unit of the paging channel signal and re-encode the decoded data unit into the reference data unit, if the decoded data unit comprises empty-paging data. The coding component may be further adapted to decode the data unit by means of PCH decoding, such as partial data decoding, full data decoding and so on.

The apparatus further comprises a controller adapted to enable and disable at least the correlator.

The receiving component is further adapted to receive, if an empty page signal is not detected with the first correlation result, a further data unit of the paging channel signal. The correlator is further adapted to correlate the reference data unit with the further data unit received to obtain a further correlation result. The determinator is further adapted to determine, based on the further correlation result, whether the paging channel signal is an empty page signal.

The correlator may be adapted to perform the correlation of the reference data unit with the received or the further-received data unit according to Equation (1) given above. The determinator is further adapted to compare the first and/or the further correlation result to at least one threshold value. The threshold value is obtained according to Equation (2) above. In addition, the correlator is further adapted to obtain the further correlation result using a higher K1 value than that used for obtaining the first correlation result.

The apparatus mentioned above may further be adapted to determine if soft bits of the received data unit are greater than or equal to a predefined value. The predefined value may be set to have a width of two bits. Furthermore, the apparatus mentioned above may further be adapted to stop the receiving of further data units of the paging channel signal.

**Brief Description of the Drawings**

In the following, the empty page detection technique presented in this disclosure is described with reference to some exemplary techniques as shown in the figures, in which:

Fig. 1      is a block diagram showing an exemplary apparatus for detecting an empty page signal;

Fig. 2      is a flow chart showing an exemplary method for detecting an empty page signal;

Fig. 3      is a block diagram showing another exemplary apparatus for detecting an empty page signal;

Fig. 4      is a flow chart showing another exemplary method for detecting an empty page signal;

Fig. 5      is a flow chart showing yet another exemplary method for detecting an empty page signal;

Fig. 6      is a chart showing a first simulation result of the empty page detecting technique described herein;

Fig. 7      is a chart showing a second simulation result of the empty page detection technique described herein;

Fig. 8     is a chart showing a third simulation result of the empty page detection technique described herein;

Fig. 9     is a chart showing a fourth simulation result of the empty page detection technique described herein; and

Fig. 10     is a chart showing a fifth simulation result of the empty page detection technique described herein.

**Detailed Description**

In the following, for purposes of explanation and not limitation, specific details are set forth in order to provide a thorough understanding of the empty paging detection technique presented herein. It will be apparent to those skilled in the art that the technique may be practiced in embodiments that depart from these specific details. For instance, although the exemplary techniques are primarily described in connection with a communication system according to the GSM specification, they are equally applicable to other kinds of communication systems.

Those skilled in the art will further appreciate that the functions explained herein below may be implemented using hardware circuitry, software, or a combination thereof. The software may be provided in conjunction with a programmed microprocessor or a general purpose computer, using an Application Specific Integrated Circuit (ASIC) and/or Digital Signal Processor (DSPs). It will also be apparent that when the empty paging detection technique is described as a method, it may also be embodied in a computer processor and a memory coupled to the processor, wherein the memory is encoded with one or more programs that perform the method when executed by the processor.

The empty paging detection technique provided in the present disclosure makes use of, among others, a correlation-based detection technique, which preforms correlation of one, two, or more data units of a paging channel signal received at a mobile terminal with a reference empty-paging data unit, also referred to as reference pattern herein. The empty-paging data unit is a data unit (of a paging-channel signal) which does not include any instructional information for the mobile terminal to act upon.

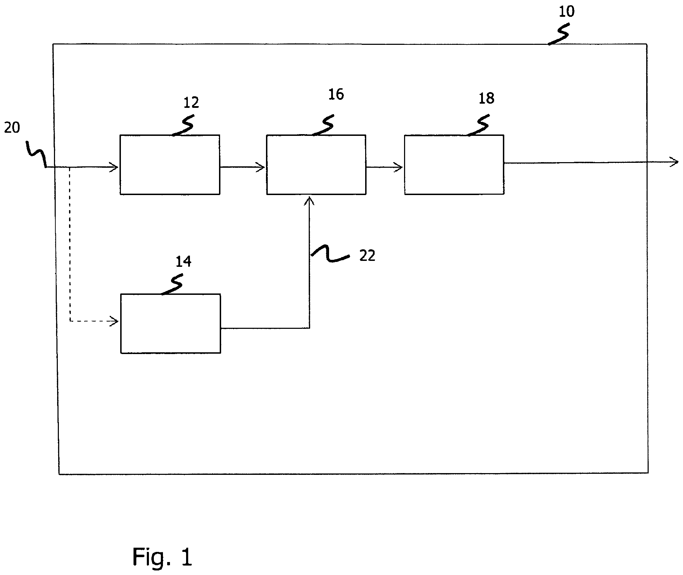

Fig. 1 shows an exemplary apparatus 10 (e.g., a mobile terminal) for empty page detection applying the above principle. The apparatus 10 comprises several components shown as 12, 14, 16, and 18 in Fig. 1.

Component 12 indicates a receiving component adapted to receive a data unit of, for example, a paging channel signal. The input of the data unit is indicated by the pointed arrow 20. Component 14 is a coding component adapted to obtain an empty-paging data unit of the paging channel signal as a reference data unit. A further component in the apparatus 10 is a correlator 16 which is adapted to correlate the reference data unit with the received data unit to obtain a correlation result. The pointed arrow 22 in Fig. 1 figuratively indicates the provision of the reference data unit to the correlator 16. The apparatus 10 further comprises a determinator 18 which is adapted to determine, based on the correlation result obtained by the correlator 16, whether the paging channel signal is an empty page signal. The result of the determination may be output from the apparatus 10 for further processing.

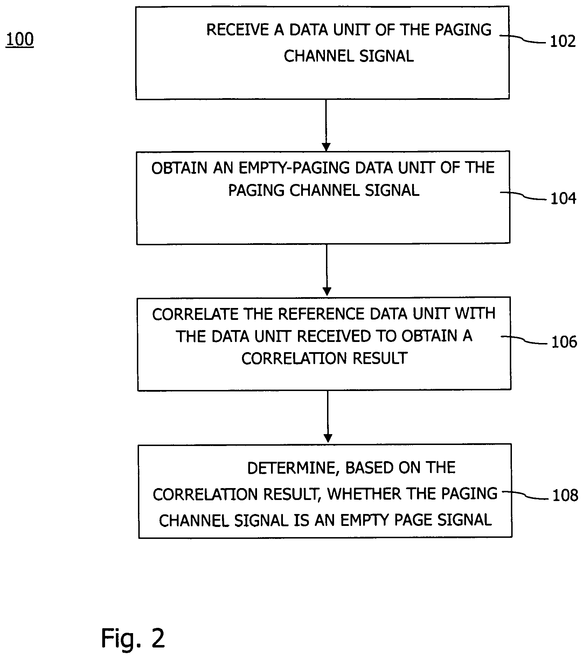

Fig. 2 shows an exemplary method 100 corresponding to the function of the apparatus 10 shown in Fig. 1. The method 100 comprises the following steps: At step 102, a first data unit of a paging channel signal is received. At step 104, an empty-paging data unit of the paging-channel signal is obtained as a reference data unit. (It should be noted that, although step 104 is placed below step 102 in Fig. 2, this does not prescribe that step 104 must be performed subsequent to step 102. In fact, the reference data unit may be obtained prior to the reception of the first data unit by the mobile terminal.) Thereafter, at step 106, the reference data unit obtained at step 104 is correlated with the data unit received at step 102 to obtain a correlation result. Further, at step 108, it is determined whether the paging channel signal is an empty page signal, according to the correlation result obtained at step 106.

As can be appreciated, the correlation-based empty-paging detection technique requires a reference empty-paging pattern. The reference pattern may be provided to the mobile terminal in various ways to be used for correlation. For example, the reference pattern may be "re-generated" by the mobile terminal based on a data unit that has been determined as empty-paging. For example, the mobile terminal may receive a data unit of a paging-channel signal, decode it using, for example, a normal PCH decoding technique, determine whether it corresponds to empty paging, and if it does, re-encode the decoded data unit into a reference pattern. Of course, there may be other ways of obtaining the reference pattern as well.

In GSM and some other communication systems, such a reference pattern may vary from base station to base station, or from transmitter to transmitter. Hence, this pattern can be obtained only after it has been received at least once, for example, by normal PCH signal reception and decoding.

Normal PCH decoding can be done by partial data decoding, full data decoding, and so on. An exemplary full data decoding requires that all the data units of a transmitted signal is received. In a paging channel signal in GSM, this is 4 bursts. Then, channel decoding is carried out on all the data units. The channel decoding is the reverse procedure of the channel-encoding done at the transmitter side, which includes, among others, interleaving, convolutional encoding, block encoding, and so on. In other words, channel decoding undoes the steps of the channel encoding. An example channel coding is standardized by the 3GPP reference body (3GPP TS45.003).

An exemplary partial data decoding technique works as follows: At least 2 data units, for example, GSM bursts, of a signal are received wherein the original full signal comprises 4 bursts. The unavailable bursts are filled with zeros and decoding is carried out by using this "made-full" signal - this is called partial decoding (a technical name given to reflect the fact that only a fraction of the real full data has been received). The decoding undoes the channel encoding done in the transmitter side; decoding thus comprises of the steps of de-interleaving, convolutional decoding, block decoding, & CRC check and so on.

Since a reference pattern is needed for the correlation-based detection, and since one way of obtaining the reference pattern requires the assistance of normal PCH reception and decoding, the overall empty-paging detection technique can in one example be regarded as encompassing two functions, the normal PCH reception and decoding, which can provide the reference pattern, and the correlation-based detection, which makes use of the reference pattern for detecting empty page.

When a mobile terminal is implemented with both functions, it is possible that a controlling mechanism, such as a controller, is provided as well in order to "switch" the signal reception and decoding between the two functions. For example, the controller can firstly disable the correlation-based detection technique (that is, the correlation mentioned above is disabled) and enable the normal PCH reception and decoding until a reference data unit has become available. Thereafter, the controller can enable the correlation-based detection technique in order to determine the empty page.

In an exemplary implementation, the controlling mechanism discussed above can be achieved by having the higher layer(s) in the mobile terminal determine whether the data unit received comprises empty paging data and make this determination result available to lower layer(s) in the mobile terminal, such as the baseband layers. The lower layer(s) then re-encodes the received data unit into a reference data unit and stores it in the mobile terminal. Thereafter, the reference data unit can be correlated with successively received data units of the paging channel signal.

The performance of the empty paging detection technique can be improved by incremental correlation measures. One way of doing so is as follows: receiving a further data unit of the paging channel signal, correlating the reference data unit with this further data unit received, and then, based on a result of this further correlation, determining whether the paging channel signal is an empty page signal.

For instance, a first data unit of a paging channel signal is received and correlated with the reference data unit to decide on empty paging. Then, a second data unit is received and correlated with the reference data unit to (again) decide on empty paging. This second correlation may be performed in case the first correlation was unsuccessful.

Using a reference data unit re-encoded from a decoded empty-paging data unit is beneficial to accurate empty-page detection, since the re-encoded reference data unit is basically error free. For at least one thing, the number of reloads of the reference data unit (for example, due to detection miss) store this changed empty paging pattern upon CRC pass) can be reduced to minimal.

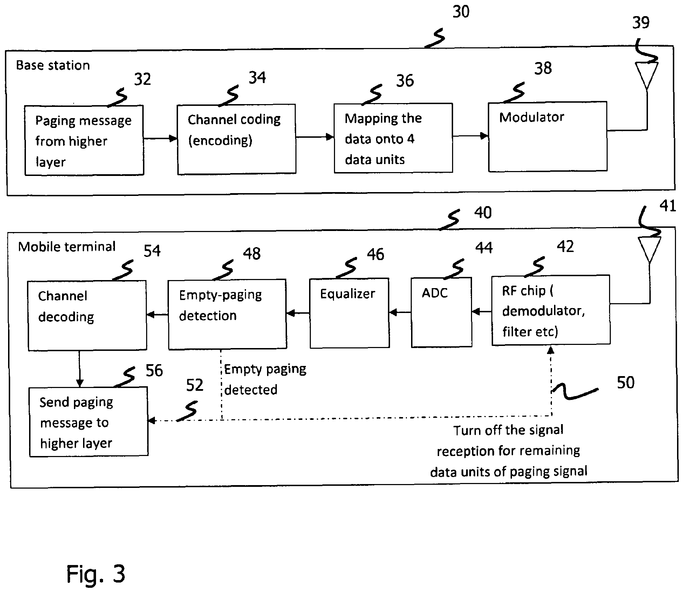

Reference is now made to Fig. 3, which is a block diagram showing another exemplary empty page detection technique. Specifically, Fig. 3 illustrates a mobile communication system comprising a base station 30 and a mobile terminal 40. The base station 30 transmits all kinds of data to the mobile terminal 40. Such data includes, among others, signals comprising paging information transmitted on the paging channel. Specifically, a paging message which carries the paging information is generated by a certain higher-layer function of the base station 30, as suggested by 32. The paging message is than encoded by the base station 30. Usually, for instance, this encoding can be carried out in a channel encoder 34. After channel encoding, the (encoded) paging message is mapped onto a plurality of data units. For example, as shown in Fig. 3 at 36, the encoded paging message may be mapped onto 4 data units (such as bursts). After mapping, the paging message is sent to a modulator 38 for modulation. This gives a modulated paging channel signal, which is finally sent in the paging channel from the antenna 39 of the base station 30 onto the air interface.

The mobile terminal 40 monitors the paging channel for any information addressed to it. As shown in Fig. 3, the paging channel signal is received by the mobile terminal antenna 41 and then passed onto the other components of the mobile terminal 40 for further processing. The further processing includes, among others, demodulation, filtering, analog-to-digital conversion, equalization, empty-paging detection (according to the empty-paging detection technique described herein), and channel decoding. Further, a control mechanism may be provided to coordinate one or more further processing operations.

As shown in Fig. 3, demodulation of the received paging channel signal may be carried out by a Radio Frequency (RF) component 42, which may be implemented as a RF chip. Some other signal processing, such as filtering, may also be performed in the radio frequency component 42. Thereafter, the paging channel signal may undergo an analog-to-digital conversion (ADC), in the ADC component 44. Next, the paging channel signal is equalized, for example, by the equalizer 46. The equalized paging channel signal is then fed to an empty-paging detection function 48, where it is detected whether the paging channel signal corresponds to empty-paging.

The empty-paging detection function 48 is designed to execute the empty-paging detection technique as described in this disclosure. If it is determined that the paging-channel signal is an empty page, the mobile terminal 40 at least temporarily switches off its receiver functions so as to save power. Consequently, the reception of the remaining data units of the paging channel signal from the base station 30 is stopped; this is indicated by the pointed arrow 50 in Fig. 3. Further, upon detection of empty paging by the empty-paging detection function 48, the mobile terminal 40 may communicate this detection result to certain higher layers of the mobile terminal 40, as indicated by the pointed arrow 52 in the Fig. 3.

If the result of the empty-paging detection is negative, it means that the paging channel signal comprises actual information for the mobile terminal to act upon, the paging channel signal is forwarded to a channel decoding component 54, which performs channel decoding of the paging channel signal. Basically, the channel decoding is a reverse process of the channel encoding, which had been performed by the channel encoder 34 of the base station 30 from which the paging channel signal originates. The channel decoding may include one or more of de-interleaving, convolutional decoding, block decoding, error check (such as CRC check), and more. After channel decoding, the (decoded) paging channel signal is forwarded to the higher layers of the mobile terminal 40 for further processing. This forwarding is indicated as 56 in Fig. 3.

The empty-paging detection function 48 implements, among others, the above-mentioned correlation based detection which is to be further described below. The correlation based detection requires a reference empty paging data unit, which may be obtained after it has been received at least once by means of normal PCH decoding, which has been described above.

In the case that normal PCH decoding is used for obtaining the reference data unit, the empty-paging detection technique presented in this disclosure requires both the normal PCH decoding as well as the correlation-based decoding. Furthermore, a control mechanism may be provided to switch between the normal PCH decoding and the correlation-based decoding. Specifically, the control mechanism may first disable the correlation-based detection and allow the conventional PCH decoding to function until at least one empty-paging data unit is detected at the receiver of the mobile terminal. This empty-paging data unit is then re-encoded into a reference data unit, which shall be used for the correlation-based detection. Once the reference data unit is available, the control mechanism can enable the correlation-based decoding.

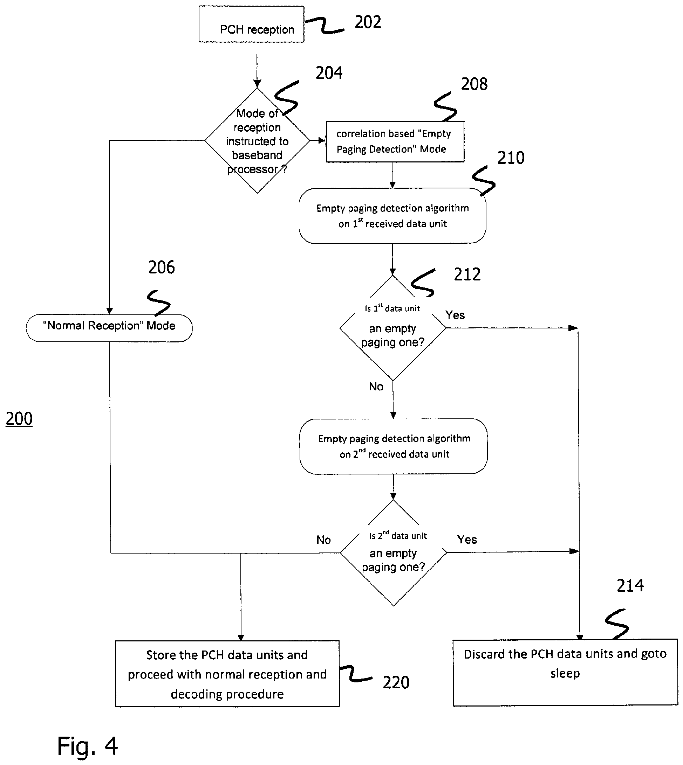

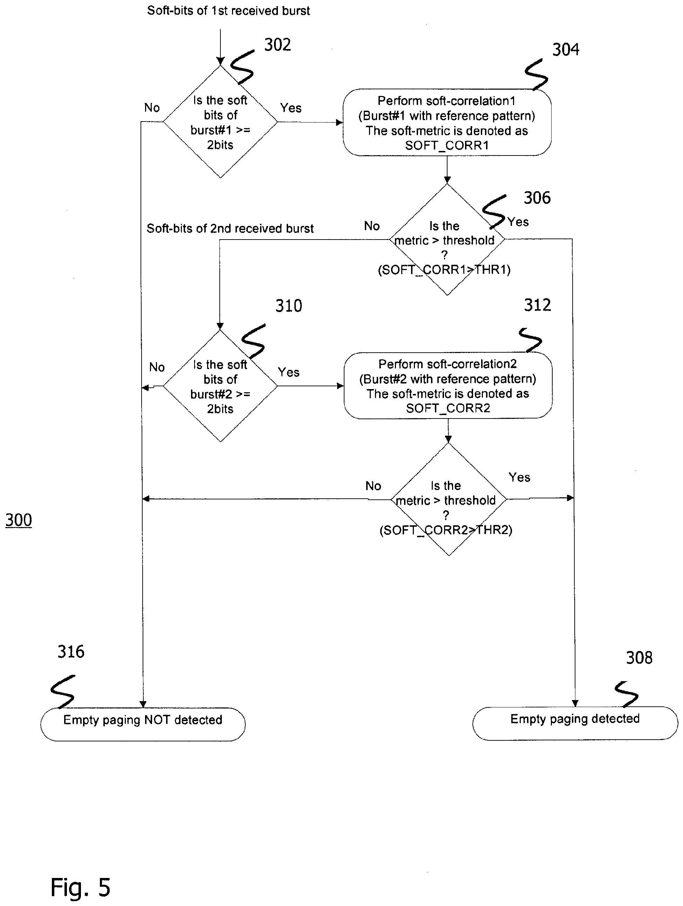

The overall empty-paging detection technique with the control mechanism described above can be further understood with reference to Figs. 4 and 5. Fig. 4 is a flow chart illustrating an exemplary method 200 of the empty-paging detection technique. The method 200 may, for example, be used in the empty-paging detection function 48 shown in Fig. 3. The empty-paging detection function 48 can be controlled by a control mechanism; that is, the method 200 shown in Fig. 4 can be enabled or disabled by the controlling mechanism. The control mechanism may be implemented in the higher layers of the mobile terminal 40.

The empty-paging detection method 200 in Fig. 4 begins with step 202, PCH reception, at which one or more paging channel signals are received. Next, at step 204, it is decided whether the subsequent process of the method 200 should follow the "normal" reception and detection mode 206, or the correlation-based detection mode 208. The "branching" to these different modes 206, 208 is effected by the control mechanism, figuratively indicated as 204.

Once the method 200 enters the correlation-based detection mode, it continues by running the correlation-based detection algorithm on a first received data unit of the paging channel signal. This is shown at step 210 in Fig, 4. At the next step, 212, it is determined whether the first received data unit corresponds to empty paging. If it does, all the subsequent data units of the paging channel signal are discarded and the mobile terminal enters the sleep mode, as indicated at step 214. However, if, at step 212, it is determined that the first data unit does not correspond to empty paging, a second received data unit is evaluated by the correlation-based empty paging detection algorithm. If it is found that the second received burst correspond to empty paging, the method again goes to step 214, where the subsequent data units of the paging channel signal are discarded and the mobile terminal enters the sleep mode. However, if it is determined that the second data unit does not correspond to empty paging, the method goes on with step 220, where the paging channel data units are stored and processed with normal reception and decoding procedure.

In the correlation-based detection mode (indicated as 208 in Fig. 4), the correlation-based detection may be run on the soft bits of the received data unit. Setting a criterion based on the bit-width of a soft bit avoids inferior performance or failure of the correlation-based detection technique in many circumstances, for example, with the received data itself is less reliable.

Fig. 5 shows another exemplary method 300 of the empty-paging technique presented in this disclosure. Basically, according to this method 300, data units, for example bursts, of a paging channel signal are received. Then the method 300 proceeds with normal PCH decoding, for example, partial data decoding using two bursts or full data decoding using four data units. With this normal PCH decoding, it can be determined whether a received data unit corresponds to empty paging, and if it is so, the empty paging data unit is re-encoded into a reference data unit, which is stored as a reference pattern. Thereafter, the reference pattern is correlated with one or more (successively) received data units to detect empty paging.

In detail, as shown in Fig. 5, the soft bits of a first received burst are first checked for confidence value at step 302. For instance, it may be checked whether the soft bits of the received burst have a width of at least two bits. If the soft bits of the received burst do not have the confidence value as calculated by

$$Confidence\ value\ = log2\ (\frac{1}{N}\ (\sum_{k=0}^{N} abs(softValue[k])\ ))$$

<div align="right">Equation (3)</div>

the correlation-based detection is by-passed and normal PCH decoding is done instead.

In Equation (3), softValue [k] means the equalized data value for the original bit information "1" or "0" for each data bit indexed by "k". This value may be expressed as a reliable metric (for example, log likelihood ratio) and is typically 8 bits wide.

"N" in Equation (3) may be 114, as 114 soft bits are usually comprised in a received burst according to GSM. As will be appreciated, the term "soft value", or, more popular, "soft bit", stands for equalized data value (for example, equalization for fading and the like encountered by virtue of the propagation channel) for the original bit information "1" or "0". This value may be expressed as a reliability metric, such as log likelihood ratio, and typically has a bit-width of 8 bits. The actual value of the soft bit corresponding to the received data can be viewed as a measure of the signal-to-noise ratio or the confidence of the received bits "1" or "0". Hence, setting a criteria based on the bit-width of the soft bit can avoid false detection or inferior performance of the proposed method, especially in the conditions where the received data itself is less reliable.

As indicated at step 304 in Fig. 5, the correlation of the received burst with the reference pattern can be carried out and validated against a threshold. The threshold may be computed using different methods, one of which being as below:

$$Soft\ Correlation1 = \sum_{k=1}^{N} (softValue[k] * referencePattern[k])$$

<div align="right">Equation (1)</div>

$$Threshold1 = K1 \sum_{k=1}^{N} (abs(softValue[k])\ ))$$

<div align="right">Equation (2)</div>

wherein

softValue[k], as explained above, means the equalized data value (for example, equalization for fading and the like encountered by virtue of the propagation channel) for the original bit information, for example, '1' or '0', for each data bit indexed by 'k';
referencePattern[k] means the reference equalized data value represented as '+1' and '-1' corresponding to bit '0' and '1', respectively; and
softCorrelation1 is the total correlation value upon considering the equalized data of the received burst.

The summation index k=1 to N corresponds to the data bit index with the upper index N corresponding to length of 1 burst for single burst correlation and length of 2 bursts for double burst correlation. In Equation (2), Threshold1 is the value given by the equation, which is used for comparing against the soft Correlation 1 computed above, and K1 is constant.

The value of K1 may be determined by simulations. K1 may be of a higher value for double burst case compared to the single burst case. For example, the value of K1 may be less than 1 according to some experimental simulations.

The validation against the threshold is indicated as step 306 in Fig. 5. If the correlation of the first burst with the reference pattern is successful and returns a detection metric, softCorrelation1 in the above equations, which is greater than the threshold (Threshold1 in the above equations), it means that the first burst corresponds to empty-paging. Accordingly, the method continues with step 308, at which "empty paging detected" is indicated as a result. Nevertheless, if empty-paging is not detected with the correlation of the first burst and the reference pattern (as indicated as 310 in Fig. 5), a similar correlation is performed with another burst, such as a second burst of the paging channel signal. This "second" correlation is indicated at step 312 in the method 300 of Fig. 5. In certain implementations, the correlation of the second burst with the reference pattern may be done by choosing a higher threshold value for K1.

Although only two correlations 304 and 312 are shown in Fig. 5, the method 300 may be designed to include further similar correlation with other data units.

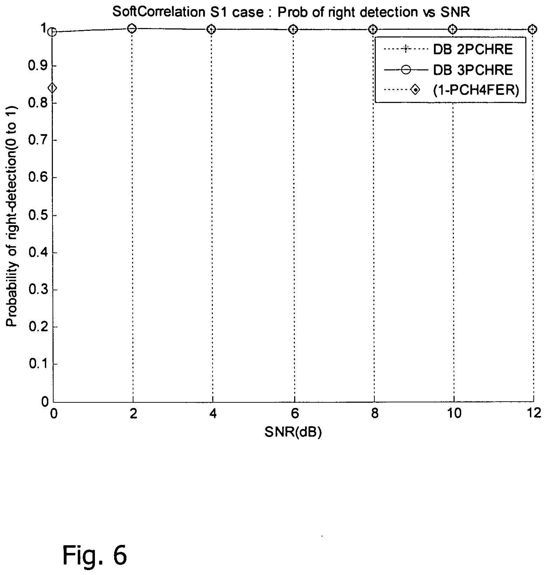

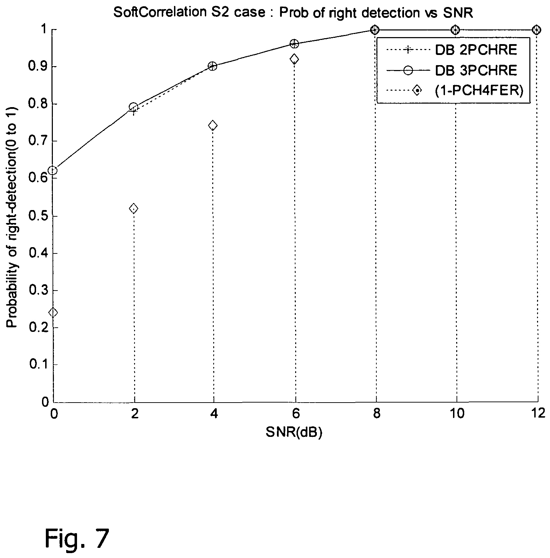

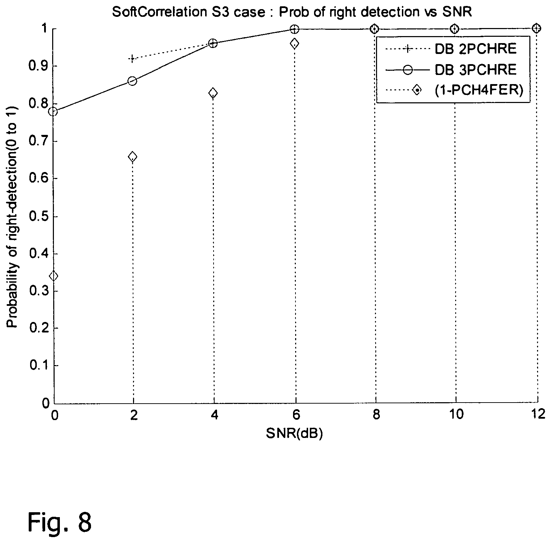

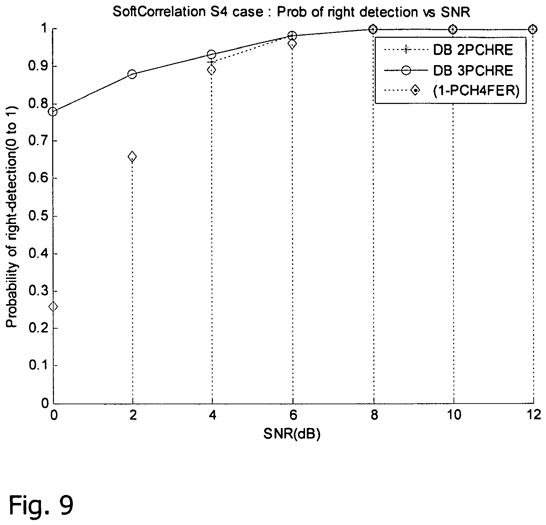

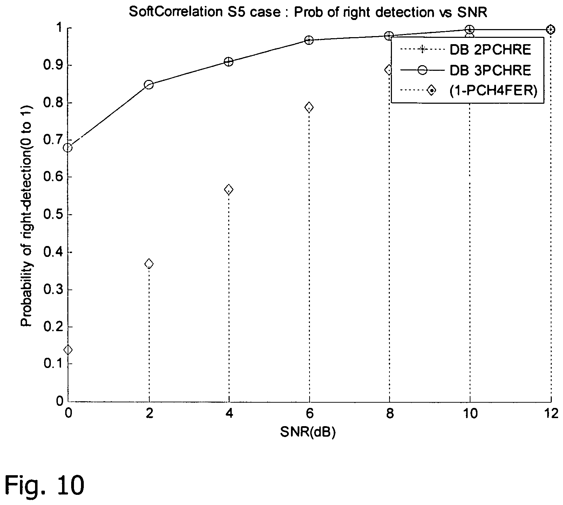

The performance of the empty-paging detection technique presented in this disclosure is shown in the charts of Figs. 6-10. Fig. 6 shows the performance in static sensitivity scenario with only AWGN noise. Fig. 7 shows the performance in a TU50 fading channel (typical urban scenario with 50Kmph speed) without frequency hopping. Fig. 8 shows the performance in a TU50 fading channel with frequency hopping. Fig. 9 shows the performance in a RA250 fading channel (a typical rural case with 250 Kmph speed) without frequency hopping. Fig. 10 shows the performance in an HT100 fading channel (a typical urban case with 100 Kmph speed) and without frequency hopping.

As illustrated in Figs. 6-10, a performance close to channel decoding using 4 received PCH bursts is obtained using the proposed method. The probability of right - detection versus SNR (or C/I) is plotted below. The legend 'DB 2PCH RE' means dual-burst empty detection algorithm with reference pattern as the re-encoded pattern generated when empty-paging is detected with CRC pass using only 2 PCH blocks. In similar lines 'DB 3PCH RE' is the case where empty-paging is detected with CRC pass using only 3 PCH blocks. The data (1-PCH4FER) corresponds to the percentage number of bursts (i.e., in units 0 to 1) passing CRC check when 4 received PCH bursts are used for channel decoding. Since the algorithm works only with 2 received bursts data, having a performance close to the channel decoder performance with 4 received PCH bursts is the best case scenario.

The empty-paging detection technique as described here above with respect to exemplary embodiments presents numerous advantages. For example, it features a high detection rate, because it can detect empty paging as soon as an empty-paging data unit is received. Secondly, due to this high detection rate, the power consumption of a mobile terminal or any other device can be significantly reduced in idle mode. Further, since the reference data unit (reference pattern) utilized in the technique is re-encoded from an empty-paging data unit, whereas the re-encoding is done at the mobile terminal, the reference data unit is error free. Therefore, the number of reloads of the reference pattern, for example due to detection miss and/or certain instructions from the higher layers, can be kept minimal. This minimal reload of the reference pattern further improves the detection rate.

While the invention has been described with reference to the above embodiments, it is to be understood that the description is for illustration purposes only. Accordingly, it is intended that the invention be limited only by the scope of the claims appended hereto.

**Claims**

1. A method (100, 300) of determining whether a paging channel signal comprising one or more data units is an empty page signal, the method (100, 300) comprising the steps of:

   paging channel signal reception and decoding, which comprises:

      receiving (102) a first data unit of the paging channel signal; and
      obtaining (104) an empty-paging data unit of the paging channel signal as a reference data unit;

   correlation-based detection, which comprises:

      correlating (106) the reference data unit with the first data unit received to obtain a first correlation result;
      determining (108), based on the first correlation result, whether the paging channel signal is an empty page signal; and
      controlling enabling and disabling of the correlation step, and wherein the step of controlling enabling and disabling of the correlation step further comprises disabling the correlation-based detection and enabling the paging channel signal reception and decoding until a reference data unit becomes available and then enabling the correlation-based detection,
      **characterized by**:

         receiving, if an empty page signal is not detected with the first correlation result, a further data unit of the paging channel signal;
         correlating (312) the reference data unit with the further data unit received to obtain a further correlation result; and
         determining (314), based on the further correlation result, whether the paging channel signal is an empty page signal,
         wherein the steps of determining further comprise comparing (306, 314) the first and the further correlation result to a threshold value being

$$Threshold1 = K1 \sum_{k=1}^{N}(abs(softValue[k]))$$

9

wherein K1 is a constant;

softValue [k] is an equalized data value for original bit information for each received data bit indexed by k; and

N corresponds to the length of one received data unit of the paging channel signal for the first correlation result, and the length of two received data units of the paging channel signal for the further correlation result,

wherein the threshold value for the further correlation result is obtained with a higher K1 value than that for obtaining the first correlation result.

2. The method (100, 300) according to claim 1, wherein the step of obtaining the empty-paging data unit comprises the steps of:

decoding a previously received data unit of the paging channel signal; and

if the decoded data unit comprises empty-paging data, re-encoding the decoded data unit into the reference data unit.

3. The method of claim 2, wherein the step of decoding the data unit is performed by Paging Channel, PCH, decoding.

4. The method (100, 300) of any one of the preceding claims, further comprising the step of:

stopping (214) the receiving of further data units of the paging channel signal.

5. A computer program product comprising program code portions for performing the steps of the method of any one of the claims 1 to 4 (100, 300) when the computer program product is run on a computing device.

6. A computer-readable recording medium storing the computer program product according to claim 5.

7. An apparatus (10, 40) for determining whether a paging channel signal comprising one or more data units is an empty page signal, the apparatus (10) comprising:

a paging channel signal reception and decoding function, which comprises

a receiving component (12) adapted to receive a first data unit of the paging channel signal; and

a coding component (14) adapted to obtain an empty-paging data unit of the paging channel signal as a reference data unit;

the apparatus further comprising a correlation-based detection function which comprises:

a correlator (16) adapted to correlate the reference data unit with the first data unit received to obtain a first correlation result;

a determinator (18) adapted to determine, based on the first correlation result, whether the paging channel signal is an empty page signal;

the apparatus further comprising a controller adapted to enable and disable the correlator (16),

wherein the controller is further adapted to disable the correlator (16) and enable the paging channel signal reception and decoding function until a reference data unit becomes available and then enable the correlator (16) to perform correlation-based detection,

**characterized in that**

the receiving component (12) is adapted to receive, if an empty page signal is not detected with the first correlation result, a further data unit of the paging channel signal;

wherein the correlator (16) is further adapted to correlate the reference data unit with the further data unit received to obtain a further correlation result; and

wherein the determinator (18) is further adapted to:

- determine, based on the further correlation result, whether the paging channel signal is an empty page signal, and

- compare the first and the further correlation result to a threshold value being

$$Threshold1 = K1 \sum_{k=1}^{N} (abs(softValue[k]))$$

wherein K1 is a constant;
softValue [k] is an equalized data value for original bit information for each received data bit indexed by k; and
N corresponds to the length of one received data unit of the paging channel signal for the first correlation result, and the length of two received data units of the paging channel signal for the further correlation result,
wherein the correlator (16) is further configured to obtain the threshold value for the further correlation result using a higher K1 value than that used for obtaining the first correlation result.

8. The apparatus (10, 40) according to claim 7, wherein the coding component is (14) adapted to obtain the empty-paging data unit is adapted to decode a previously received data unit of the paging channel signal and re-encode the decoded data unit into the reference data unit if the decoded data unit comprises empty-paging data.

9. The apparatus (10, 40) according to claim 7, wherein the coding component (14) is further adapted to obtain the empty-paging data unit is further adapted to decode the data unit by Paging Channel, PCH, decoding.

10. The apparatus (10, 40) according to any one of claims 7 to 9, further adapted to stop the receiving of further data units of the paging channel signal.

**Patentansprüche**

1. Verfahren (100, 300) zum Bestimmen, ob ein Funkrufkanalsignal, das eine oder mehrere Dateneinheiten umfasst, ein Leerseitensignal ist, wobei das Verfahren (100, 300) die folgenden Schritte umfasst:

Empfang und Decodierung eines Funkrufkanalsignals, was umfasst:

Empfangen (102) einer ersten Dateneinheit des Funkrufkanalsignals; und
Erhalten (104) einer leeren Funkrufdateneinheit des Funkrufkanalsignals als eine Referenzdateneinheit;

korrelationsbasierte Erkennung, was umfasst:

Korrelieren (106) der Referenzdateneinheit mit der empfangenen ersten Dateneinheit, um ein erstes Korrelationsergebnis zu erhalten;
Bestimmen (108) basierend auf dem ersten Korrelationsergebnis, ob das Funkrufkanalsignal ein Leerseitensignal ist; und
Steuern des Aktivierens und Deaktivierens des Korrelationsschritts, und wobei der Schritt des Steuerns des Aktivierens und Deaktivierens des Korrelationsschritts ferner ein Deaktivieren der korrelationsbasierten Erkennung und Aktivieren des Empfangs und der Decodierung des Funkrufkanalsignals, bis eine Referenzdateneinheit verfügbar wird, und anschließendes Aktivieren der korrelationsbasierten Erkennung umfasst,

**gekennzeichnet durch**:

Empfangen, falls kein Leerseitensignal mit dem ersten Korrelationsergebnis erkannt wird, einer weiteren Dateneinheit des Funkrufkanalsignals;
Korrelieren (312) der Referenzdateneinheit mit der empfangenen weiteren Dateneinheit, um ein weiteres Korrelationsergebnis zu erhalten;
Bestimmen (314) basierend auf dem weiteren Korrelationsergebnis, ob das Funkrufkanalsignal ein Leerseitensignal ist,
wobei die Schritte des Bestimmens ferner ein Vergleichen (306, 314) des ersten und des weiteren Korrelationsergebnisses mit einem Schwellenwert umfassen, der

$$Threshold1 = K1 \sum_{k=1}^{N} \bigl(abs(softValue[k])\bigr)$$

ist, wobei K1 eine Konstante ist;

softValue [k] ein gleichgesetzter Datenwert für Originalbitinformationen für jedes empfangene Datenbit mit dem Index k ist; und

N der Länge einer empfangenen Dateneinheit des Funkrufkanalsignals für das erste Korrelationsergebnis und der Länge von zwei empfangenen Dateneinheiten des Funkrufkanalsignals für das weitere Korrelationsergebnis entspricht,

wobei der Schwellenwert für das weitere Korrelationsergebnis mit einem höheren K1-Wert als dem zum Erhalten des ersten Korrelationsergebnisses erhalten wird.

2. Verfahren (100, 300) nach Anspruch 1, wobei der Schritt des Erhaltens der leeren Funkrufdateneinheit die folgenden Schritte umfasst:

Decodieren einer vorher empfangenen Dateneinheit des Funkrufkanalsignals; und
Umcodieren der decodierten Daten in die Referenzdateneinheit, falls die decodierte Dateneinheit leere Funkrufdaten umfasst.

3. Verfahren nach Anspruch 2, wobei der Schritt des Decodierens der Dateneinheit durch Funkrufkanal, PCH,-Decodierung erfolgt.

4. Verfahren (100, 300) nach einem der vorhergehenden Ansprüche, ferner umfassend den folgenden Schritt:

Stoppen (214) des Empfangens von weiteren Dateneinheiten des Funkrufkanalsignals.

5. Computerprogrammprodukt, umfassend Programmcodeabschnitte zum Ausführen der Schritte des Verfahrens (100, 300) nach einem der vorhergehenden Ansprüche 1 bis 4, wenn das Computerprogrammprodukt auf einer Datenverarbeitungsvorrichtung ausgeführt wird.

6. Computerlesbares Aufzeichnungsmedium, welches das Computerprogrammprodukt nach Anspruch 5 speichert.

7. Vorrichtung (10, 40) zum Bestimmen, ob ein Funkrufkanalsignal, das eine oder mehrere Dateneinheiten umfasst, ein Leerseitensignal ist, wobei die Vorrichtung (10) umfasst:

eine Funktion für Empfang und Decodierung von Funkrufkanalsignalen, die umfasst:

eine Empfangskomponente (12), die zum Empfangen einer ersten Dateneinheit des Funkrufkanalsignals ausgelegt ist; und
eine Codierkomponente (14), die zum Erhalten einer leeren Funkrufdateneinheit des Funkrufkanalsignals als eine Referenzdateneinheit ausgelegt ist;

wobei die Vorrichtung ferner eine Funktion für korrelationsbasierte Erkennung umfasst, die umfasst:

einen Korrelator (16), der so ausgelegt ist, dass er die Referenzdateneinheit mit der empfangenen ersten Dateneinheit korreliert, um ein erstes Korrelationsergebnis zu erhalten;
eine Bestimmungseinrichtung (18), die so ausgelegt ist, dass sie basierend auf dem ersten Korrelationsergebnis bestimmt, ob das Funkrufkanalsignal ein Leerseitensignal ist;

die Vorrichtung ferner einen Controller umfasst, der zum Aktivieren und Deaktivieren des Korrelators (16) ausgelegt ist,
wobei der Controller ferner so ausgelegt ist, dass er den Korrelator (16) deaktiviert und die Funktion für Empfang und Decodierung von Funkrufkanalsignalen aktiviert, bis eine Referenzdateneinheit verfügbar wird, und anschließend den Korrelator (16) aktiviert, um korrelationsbasierte Erkennung durchzuführen,
**dadurch gekennzeichnet, dass**
die Empfangskomponente (12) so ausgelegt ist, dass sie, falls kein Leerseitensignal mit dem ersten Korrelationsergebnis erkannt wird, eine weitere Dateneinheit des Funkrufkanalsignals empfängt;

wobei der Korrelator (16) ferner so ausgelegt ist, dass er die Referenzdateneinheit mit der empfangenen weiteren Dateneinheit korreliert, um ein weiteres Korrelationsergebnis zu erhalten; und

wobei die Bestimmungseinrichtung (18) ferner ausgelegt ist zum:

- Bestimmen basierend auf dem weiteren Korrelationsergebnis, ob das Funkrufkanalsignal ein Leerseitensignal ist; und
- Vergleichen des ersten und des weiteren Korrelationsergebnisses mit einem Schwellenwert, der

$$Threshold1 = K1 \sum_{k=1}^{N} \big( abs(softValue[k]) \big)$$

ist, wobei K1 eine Konstante ist;

softValue [k] ein gleichgesetzter Datenwert für Originalbitinformationen für jedes empfangene Datenbit mit dem Index k ist; und

N der Länge einer empfangenen Dateneinheit des Funkrufkanalsignals für das erste Korrelationsergebnis und der Länge von zwei empfangenen Dateneinheiten des Funkrufkanalsignals für das weitere Korrelationsergebnis entspricht,

wobei der Korrelator (16) ferner so konfiguriert ist, dass er den Schwellenwert für das weitere Korrelationsergebnis mit einem höheren K1-Wert als dem erhält, der zum Erhalten des ersten Korrelationsergebnisses verwendet wird.

8. Vorrichtung (10, 40) nach Anspruch 7, wobei die Codierkomponente (14), die so ausgelegt ist, dass sie die leere Funkrufdateneinheit erhält, so ausgelegt ist, dass sie eine vorher empfangene Dateneinheit des Funkrufkanalsignals decodiert und die decodierte Dateneinheit in die Referenzdateneinheit umcodiert, falls die decodierte Dateneinheit leere Funkrufdaten umfasst.

9. Vorrichtung (10, 40), nach Anspruch 7, wobei die Codierkomponente (14), die ferner so ausgelegt ist, dass sie die leere Funkrufdateneinheit erhält, ferner so ausgelegt ist, das sie die Dateneinheit durch Funkrufkanal, PCH,-Decodierung decodiert.

10. Vorrichtung (10, 40) nach einem der Ansprüche 7 bis 9, die ferner so ausgelegt ist, dass sie das Empfangen von weiteren Dateneinheiten des Funkrufkanalsignals stoppt.

**Revendications**

1. Procédé (100, 300) de détermination si un signal de canal d'indication d'appel comprenant une ou plusieurs unités de données est un signal d'indicateur d'appel vide, le procédé (100, 300) comprenant les étapes de :

la réception et le décodage de signal de canal d'indication d'appel, comprenant :

la réception (102) d'une première unité de données du signal de canal d'indication d'appel ; et
l'obtention (104) d'une unité de données d'indication d'appel vide du signal de canal d'indication d'appel en tant qu'une unité de données de référence ;

la détection sur la base d'une corrélation, qui comprend :

la corrélation (106) de l'unité de données de référence avec la première unité de données reçue pour obtenir un premier résultat de corrélation ;
la détermination (108), sur la base du premier résultat de corrélation, si le signal de canal d'indication d'appel est un signal d'indicateur d'appel vide ; et
la commande de l'activation et de la désactivation de l'étape de corrélation, et dans lequel l'étape de la commande de l'activation et de la désactivation de l'étape de corrélation comprend en outre la désactivation de la détection sur la base d'une corrélation et l'activation de la réception et du décodage du signal de canal d'indication d'appel jusqu'à ce qu'une unité de données de référence devienne disponible puis l'activation de la détection sur la base d'une corrélation,

**caractérisé par** :

la réception, si un signal d'indicateur d'appel vide n'est pas détecté avec le premier résultat de corrélation, d'une autre unité de données du signal de canal d'indication d'appel ;

la corrélation (312) de l'unité de données de référence avec l'autre unité de données reçue pour obtenir un autre résultat de corrélation ; et

la détermination (314), sur la base de l'autre résultat de corrélation, si le signal de canal d'indication d'appel est un signal d'indicateur d'appel vide,

dans lequel les étapes de détermination comprennent en outre la comparaison (306, 314) du premier résultat de corrélation et de l'autre résultat de corrélation à une valeur de seuil qui est :

$$Threshold1 = K1 \sum_{k=1}^{N} \big(abs(softValue[k])\big)$$

où K1 est une constante ;

softValue [k] est une valeur de données égalisée pour des informations de bits d'origine pour chaque bit de données reçu indexé par k ; et

N correspond à la longueur d'une unité de données reçue du signal de canal d'indication d'appel pour le premier résultat de corrélation, et la longueur de deux unités de données reçues du signal de canal d'indication d'appel pour l'autre résultat de corrélation,

dans lequel la valeur de seuil pour l'autre résultat de corrélation est obtenue avec une valeur K1 supérieure à celle pour l'obtention du premier résultat de corrélation.

2. Procédé (100, 300) selon la revendication 1, dans lequel l'étape de l'obtention de l'unité de données d'indication d'appel vide comprend les étapes de :

le décodage d'une unité de données précédemment reçue du signal de canal d'indication d'appel ; et

si l'unité de données décodée comprend des données d'indication d'appel vide, le recodage de l'unité de données décodée en l'unité de données de référence.

3. Procédé selon la revendication 2, dans lequel l'étape du décodage de l'unité de données est effectuée par un décodage de canal d'indication d'appel, PCH.

4. Procédé (100, 300) selon l'une quelconque des revendications précédentes, comprenant en outre l'étape de :

l'arrêt (214) de la réception d'autres unités de données du signal de canal d'indication d'appel.

5. Produit de programme informatique comprenant des portions de code de programme pour effectuer les étapes du procédé selon l'une quelconque des revendications 1 à 4 (100, 300) lorsque le produit de programme informatique est exécuté sur un dispositif informatique.

6. Support d'enregistrement lisible par ordinateur mémorisant le produit de programme informatique selon la revendication 5.

7. Appareil (10, 40) de détermination si un signal de canal d'indication d'appel comprenant une ou plusieurs unités de données est un signal d'indicateur d'appel vide, l'appareil (10) comprenant :

une fonction de réception et de décodage de signal de canal d'indication d'appel, comprenant :

un composant de réception (12) apte à effectuer la réception d'une première unité de données du signal de canal d'indication d'appel ; et

un composant de codage (14) apte à effectuer l'obtention d'une unité de données d'indication d'appel vide du signal de canal d'indication d'appel en tant qu'une unité de données de référence ;

l'appareil comprenant en outre une fonction de détection sur la base d'une corrélation comprenant :

un corrélateur (16) apte à effectuer la corrélation de l'unité de données de référence avec la première unité de données reçue pour obtenir un premier résultat de corrélation ;

un déterminateur (18) apte à effectuer la détermination, sur la base du premier résultat de corrélation, si le signal de canal d'indication d'appel est un signal d'indicateur d'appel vide ; et

l'appareil comprenant en outre un organe de commande apte à activer et désactiver le corrélateur (16), dans lequel l'organe de commande est en outre apte à désactiver le corrélateur (16) et à activer la fonction de réception et de décodage du signal de canal d'indication d'appel jusqu'à ce qu'une unité de données de référence devienne disponible puis activer le corrélateur (16) pour effectuer la détection sur la base d'une corrélation, **caractérisé par** :

le composant de réception (12) est apte à effectuer la réception, si un signal d'indicateur d'appel vide n'est pas détecté avec le premier résultat de corrélation, d'une autre unité de données du signal de canal d'indication d'appel ;

dans lequel le corrélateur (16) est en outre apte à effectuer la corrélation de l'unité de données de référence avec l'autre unité de données reçue pour obtenir un autre résultat de corrélation ; et

dans lequel ledit déterminateur (18) est en outre apte à effectuer :

- la détermination, sur la base de l'autre résultat de corrélation, si le signal de canal d'indication d'appel est un signal d'indicateur d'appel vide, et
- la comparaison du premier résultat de corrélation et de l'autre résultat de corrélation à une valeur de seuil qui est :

$$Threshold1 = K1 \sum_{k=1}^{N} \big(abs(softValue[k])\big)$$

où K1 est une constante ;

softValue [k] est une valeur de données égalisée pour des informations de bits d'origine pour chaque bit de données reçu indexé par k ; et

N correspond à la longueur d'une unité de données reçue du signal de canal d'indication d'appel pour le premier résultat de corrélation, et la longueur de deux unités de données reçues du signal de canal d'indication d'appel pour l'autre résultat de corrélation,

dans lequel le corrélateur (16) est en outre configuré pour effectuer l'obtention de la valeur de seuil pour l'autre résultat de corrélation en utilisant une valeur K1 supérieure à celle utilisée pour l'obtention du premier résultat de corrélation.

8. Appareil (10, 40) selon la revendication 7, dans lequel le composant de codage (14) apte à effectuer l'obtention de l'unité de données d'indication d'appel vide est apte à effectuer le décodage d'une unité de données précédemment reçue du signal de canal d'indication d'appel et le recodage de l'unité de données décodée en l'unité de données de référence si l'unité de données décodée comprend des données d'indication d'appel vide.

9. Appareil (10, 40) selon la revendication 7, dans lequel le composant de codage (14) apte à effectuer l'obtention de l'unité de données d'indication d'appel vide est en outre apte à effectuer le décodage de l'unité de données par un décodage de canal d'indication d'appel, PCH.

10. Appareil (10, 40) selon l'une quelconque des revendications 7 à 9, en outre apte à effectuer l'arrêt de la réception d'autres unités de données du signal de canal d'indication d'appel.

Fig. 1

100

```
┌─────────────────────────────────────────┐
│   RECEIVE A DATA UNIT OF THE PAGING       │── 102
│          CHANNEL SIGNAL                   │
└─────────────────────────────────────────┘
                    │
                    ▼
┌─────────────────────────────────────────┐
│  OBTAIN AN EMPTY-PAGING DATA UNIT OF THE  │
│        PAGING CHANNEL SIGNAL              │── 104
└─────────────────────────────────────────┘
                    │
                    ▼
┌─────────────────────────────────────────┐
│  CORRELATE THE REFERENCE DATA UNIT WITH   │
│     THE DATA UNIT RECEIVED TO OBTAIN A    │── 106
│          CORRELATION RESULT               │
└─────────────────────────────────────────┘
                    │
                    ▼
┌─────────────────────────────────────────┐
│         DETERMINE, BASED ON THE           │
│  CORRELATION RESULT, WHETHER THE PAGING   │── 108
│  CHANNEL SIGNAL IS AN EMPTY PAGE SIGNAL   │
└─────────────────────────────────────────┘
```

Fig. 2

**Base station** 30 39

32 34 36 38

| Paging message from higher layer | → | Channel coding (encoding) | → | Mapping the data onto 4 data units | → | Modulator |

**Mobile terminal** 40 41

54 48 46 44 42

| Channel decoding | ← | Empty-paging detection | ← | Equalizer | ← | ADC | ← | RF chip ( demodulator, filter etc) |

56 52

Empty paging detected

| Send paging message to higher layer |

50

Turn off the signal reception for remaining data units of paging signal

# Fig. 3

Fig. 4

Soft-bits of 1st received burst

**302**

**No** ⟵ Is the soft bits of burst#1 >= 2bits **Yes** ⟶

**304**

Perform soft-correlation1 (Burst#1 with reference pattern) The soft-metric is denoted as SOFT_CORR1

**306**

Soft-bits of 2nd received burst **No** ⟵ Is the metric > threshold ? (SOFT_CORR1>THR1) **Yes** ⟶

**310**

**No** ⟵ Is the soft bits of burst#2 >= 2bits **Yes** ⟶

**312**

Perform soft-correlation2 (Burst#2 with reference pattern) The soft-metric is denoted as SOFT_CORR2

**No** ⟵ Is the metric > threshold ? (SOFT_CORR2>THR2) **Yes** ⟶

300

**316**

Empty paging NOT detected

**308**

Empty paging detected

# Fig. 5

Fig. 6

Fig. 7

Fig. 8

Fig. 9

SoftCorrelation S5 case : Prob of right detection vs SNR

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1670274 A2
- EP 1489863 A2
- EP 1816882 A1
- US 6765893 B1
- EP 1389883 A1